# EUROPEAN PATENT SPECIFICATION

(11) **EP 2 209 934 B1**
(45) Date of publication and mention of the grant of the patent: **07.09.2016**
(21) Application number: 08844994.7
(22) Date of filing: 29.10.2008
(51) Int. Cl.: D01F 11/12, D01F 9/12, C01B 31/02

(54) **METHOD FOR PRODUCTION OF NEAT CARBON NANOTUBE ARTICLES PROCESSED FROM SUPER ACID SOLUTIONS**
HERSTELLUNGSVERFAHREN FÜR REIN KOHLENSTOFFNANORÖHRCHENGEGENSTÄNDE AUS HOCHACIDEN LÖSUNGEN
PROCÉDÉS DE FABRICATION DES ARTICLES À BASE DE NANOTUBES DE CARBONE PURE OBTENUS À PARTIR DE SOLUTIONS DE SUPER-ACIDE

(30) Priority: 29.10.2007 US 983495 P
(43) Date of publication of application: 28.07.2010
(73) Proprietor: William Marsh Rice University, Houston, TX 77005 (US)
(72) Inventor: PASQUALI, Matteo, Houston TX 77005 (US); PARRA-VASQUEZ, A. Nicholas, G., Houston TX 77054 (US); BEHABTU, Natneal, Houston TX 77025 (US); BOOKER, Richard, Houston TX 77005 (US); FAN, Hua, Houston TX 77030 (US); DAVIS, Virginia, Auburn AL 36830 (US); HWANG, Wen-fang, Midland MI 48642 (US); SCHMIDT, Howard, K., Cypress TX 77433 (US); GREEN, Micah, J., Houston TX 77054 (US); YOUNG, Colin, C., Houston, TX 77030 (US)
(74) Representative: Camenisch, Andrew Richard
(86) International application number: PCT/US2008/081574
(87) International publication number: WO 2009/058855

(56) References cited:
- US-A1- 2003 170 166
- US-A1- 2007 243 124
- US-B2- 7 247 290
- DAVIS V A ET AL: "PHASE BEHAVIOR AND RHEOLOGY OF SWNTS IN SUPERACIDS" MACROMOLECULES, ACS, WASHINGTON, DC, US, vol. 37, no. 1, 1 January 2004 (2004-01-01), pages 154-160, XP008054982 ISSN: 0024-9297
- VIGOLO B ET AL: "MACROSCOPIC FIBERS AND RIBBONS OF ORIENTED CARBON NANOTUBES" 17 November 2000 (2000-11-17), SCIENCE, AMERICAN ASSOCIATION FOR THE ADVANCEMENT OF SCIENCE, US, WASHINGTON, DC, PAGE(S) 1331 - 1334 , XP008004074 ISSN: 0036-8075 figures 3B,3C page 1332, column 2; figure 2 page 1333, column 3 abstract

## Description

### CROSS-REFERENCE TO RELATED APPLICATIONS

This application claims priority to United States provisional patent application 60/983,495, filed October 29, 2007.

### STATEMENT REGARDING FEDERALLY SPONSORED RESEARCH

This work was sponsored by the Office of Naval Research award N00014-01-1-0789 and the Air Force Office of Scientific Research-Armchair Quantum Wire award FA9550-06-1-0207.

### BACKGROUND

Carbon nanotubes possess several properties that make them candidates for the next generation of light-weight materials. Carbon nanotubes possess mechanical, electrical, and thermal properties surpassing those of steel, copper, and diamond, respectively, but with a much lower density. Although many applications utilizing carbon nanotubes have been envisioned, difficulties associated with their processing have hampered efforts to bring these nanoscale entities into the macroscale. Macroscale carbon nanotube-based objects may be formed from neat carbon nanotubes or from carbon nanotubes dispersed in a suitable matrix, such as carbon nanotube-based polymer composites. Macroscale objects formed from neat carbon nanotubes may take on exemplary forms such as fibers, tapes, films and sheets. Processed carbon nanotubes may also be extruded into molds. To date, macroscale objects formed from carbon nanotubes have yet to demonstrate the properties observed on the nanoscale. Many of the envisioned applications of carbon nanotubes utilize aligned carbon nanotubes to take advantage of the directional nature of their properties.

The two main methods for materials processing include liquid- and solid-state spinning techniques. Solid-state spinning is usually performed with natural materials, where discrete fibers are spun into a material such as a yarn. In contrast, most synthetic fibers, such as those produced from polymers, are formed from a concentrated, viscous fluid. The viscous fluid may be a melt or solution of the fiber material, which is extruded through flow processing and converted into a fiber through cooling or solvent removal. These two methods have been adapted for spinning of carbon nanotubes into fibers, taking into consideration the inherent properties of carbon nanotubes. In particular, liquid-state spinning of carbon nanotubes has been hampered by carbon nanotubes' high melting points and lack of solubility in normal organic solvents. To date, solid-state spinning has produced neat carbon nanotube fibers with the best properties, although the fibers lack coalescence and densification to most favorably take advantage of the intrinsic carbon nanotube properties. Liquid-state spinning has the potential to produce a much denser carbon nanotube fiber.

Many methods have been sought to improve carbon nanotube solubility for liquid-state processing, including functionalization of the carbon nanotubes with organic solubilizing groups and dispersion of the carbon nanotubes in the presence of a surfactant. These techniques do improve the processability of carbon nanotubes, but their use is limited. Functionalization changes the structure of the carbon nanotubes such that their attractive mechanical, electrical and thermal properties are diminished. Surfactants allow solutions of individual carbon nanotubes to be produced, but concentrations obtained are fairly low, and surfactant has to be removed during processing of the carbon nanotubes into macroscale objects. Super acids have also been used to solubilize and process carbon nanotubes.

In view of the foregoing, methods to produce high concentration carbon nanotube solutions that facilitate liquid-state processing into macroscale objects are of considerable utility. In particular, methods to process unfunctionalized carbon nanotubes using conventional liquid-state processing techniques for forming fibers, tapes, sheets, films and molds would be of considerable benefit. Further, application of these various techniques to produce macroscale objects having aligned carbon nanotubes is of further utility.

### SUMMARY

Methods for making articles comprising neat aligned carbon nanotubes are described. The methods comprise the steps of: 1) preparing a solution of carbon nanotubes in a super acid solvent; 2) extruding the solution to provide an extrudate; and 3) removing the super acid solvent from the extrudate. The concentration of carbon nanotubes in the super acid solvent is chosen such that the solution is in a liquid crystalline state. In certain embodiments, the methods include applying tension during extruding step.

Articles comprising neat aligned carbon nanotubes are described. The articles are prepared by processes comprising: 1) preparing a solution of carbon nanotubes in a super acid solvent; 2) extruding the solution to provide an extrudate; and 3) coagulating the extrudate to remove the super acid solvent. The concentration of carbon nanotubes in the super acid solvent is chosen such that the solution is in a liquid crystalline state.

The solution is extruded into at least one coagulant without exposure to atmosphere. In some embodiments, the solution is extruded into at least one coagulant after passing through an air gap. In some embodiments, at least one coagulant is co-flowed with the extrudate.

Articles comprising neat aligned carbon nanotubes are disclosed. The articles are prepared by processes comprising: 1) preparing a solution of carbon nanotubes in a super acid solvent; 2) extruding the solution to provide an extrudate; and 3) evaporating the super acid solvent. The concentration of carbon nanotubes in the super acid solvent is chosen such that the solution is in a liquid crystalline state.

Methods to densify existing carbon nanotube articles are presented. The methods comprise treating the articles with chlorosulfonic acid and then removing the chlorosulfonic acid. The existing carbon nanotube articles are selected from a group consisting of fibers, arrays, and alewives.

The foregoing has outlined rather broadly the features of the present disclosure in order that the detailed description that follows may be better understood. Additional features and advantages of the disclosure will be described hereinafter, which form the subject of the claims.

### BRIEF DESCRIPTION OF THE DRAWINGS

For a more complete understanding of the present disclosure, and the advantages thereof, reference is now made to the following descriptions to be taken in conjunction with the accompanying drawings describing a specific embodiment of the disclosure, wherein:
FIGURE 1 shows an embodiment of polarized light microscopy images of a liquid crystalline solution of single-wall carbon nanotubes in chlorosulfonic acid over a concentration range of 10 to 17 wt. %.
FIGURE 2 shows an embodiment of an exemplary carbon nanotube phase diagram.
FIGURE 3 shows embodiments of polarized light microscopy and SEM images of liquid crystalline carbon nanotube solutions in chlorosulfonic acid and sulfuric acid.
FIGURE 4 shows an embodiment of a polarized light microscopy image of a liquid crystalline single-wall carbon nanotube solution in chlorosulfonic acid, wherein the single-wall carbon nanotubes are about 30 µm in length.
FIGURE 5 shows an embodiment of a polarized light microscopy image of a liquid crystalline single-wall carbon nanotube solution in chlorosulfonic acid, wherein the carbon nanotubes are about 500 µm in length.
FIGURE 6 shows an embodiment of a polarized light microscopy image of a liquid crystalline double-wall carbon nanotube solution in chlorosulfonic acid, wherein the double-wall carbon nanotubes are about 30 µm in length.
FIGURE 7 shows an embodiment of a polarized light microscopy image of a liquid crystalline 10 wt. % solution of shortened single-wall carbon nanotubes in chlorosulfonic acid.
FIGURE 8 shows embodiments of polarized light microscopy images of non-liquid crystalline solutions of 10 wt. % shortened single-wall carbon nanotubes in DMF and 120% sulfuric acid.
FIGURE 9 shows an embodiment of an SEM image of an exemplary fiber grown from a 10 wt. % solution of shortened single-wall carbon nanotubes in chlorosulfonic acid.
FIGURE 10 shows representative schematic embodiments of carbon nanotube fibers grown from various lengths of carbon nanotubes.
FIGURE 11 shows representative embodiments of wet-jet wet spinning processes for carbon nanotube extrudates.
FIGURE 12 shows a representative experimental embodiment of a dry-jet wet spinning process for carbon nanotube extrudates.
FIGURE 13 shows embodiments of SEM images of carbon nanotube fibers produced by wet-jet wet spinning and dry-jet wet spinning processes.
FIGURE 14 shows an embodiment of condensation on a carbon nanotube extrudate held in an air gap.
FIGURE 15 shows an embodiment of an apparatus for producing carbon nanotube extrudates in the presence of a co-flowing coagulant.
FIGURE 16 shows an embodiment of an SEM image of a carbon nanotube extrudate produced from a 7 wt. % solution of single-wall carbon nanotubes in chlorosulfonic acid with co-flowing 96% sulfuric acid as a coagulant.
FIGURE 17 shows an embodiment of an SEM image of a carbon nanotube extrudate produced from a 17 wt. % solution of single-wall carbon nanotubes in chlorosulfonic acid with co-flowing PEG-200 as a coagulant.
FIGURE 18 shows an embodiment of an exemplary apparatus for dry spinning of carbon nanotube extrudates utilizing microwave heating for solvent evaporation.
FIGURE 19 shows an embodiment of a film of single-wall carbon nanotubes produced from a 12 wt. % solution of single-wall carbon nanotubes in chlorosulfonic acid using diethyl ether as the coagulant.
FIGURE 20 shows an embodiment of a film of shortened single-wall carbon nanotubes produced from a 10 wt. % solution of single-wall carbon nanotubes in chlorosulfonic acid.
FIGURE 21 shows an embodiment of a mixer/extruder utilized for carbon nanotube processing.
FIGURE 22 shows an embodiment of a mixer/extruder utilized for carbon nanotube processing operating in its extruder mode.

### DETAILED DESCRIPTION

In the following description, certain details are set forth such as specific quantities, sizes, etc. so as to provide a thorough understanding of the present embodiments disclosed herein. However, it will be obvious to those skilled in the art that the present disclosure may be practiced without such specific details. In many cases, details concerning such considerations and the like have been omitted inasmuch as such details are not necessary to obtain a complete understanding of the present disclosure and are within the skills of persons of ordinary skill in the relevant art.

Referring to the drawings in general, it will be understood that the illustrations are for the purpose of describing a particular embodiment of the disclosure and are not intended to be limiting thereto. Drawings are not necessarily to scale.

While most of the terms used herein will be recognizable to those of skill in the art, the following definitions are nevertheless put forth to aid in the understanding of the present disclosure. It should be understood, however, that when not explicitly defined, terms should be interpreted as adopting a meaning presently accepted by those of skill in the art.

"Coagulation," as defined herein, refers to the process of removing solvent from a carbon nanotube extrudate through use of a coagulant.

"Substantially defect free," as defined herein refers to a condition wherein fewer than about 5% of the sites in carbon nanotube sidewall lattices are defect sites.

"Tension or tensioning," as defined herein, refers to the process of applying a stretching or elongational force to an object. "Tension force or tensioning force" refers to a stretching or elongational force applied to an object.

Various embodiments presented hereinbelow refer to carbon nanotubes. In these various embodiments, the carbon nanotubes may be formed by any known technique and can be in a variety of forms, such as soot, powder, ropes, bundles, individual carbon nanotubes, carbon nanotube fibers, surface-bound arrays, carbon alewives, bucky paper, unpurified carbon nanotubes, and purified carbon nanotubes. Carbon alewives are described in commonly owned United States Patent Application No. 10/189,129, which is incorporated herein by reference. The carbon nanotubes may be any length, diameter, or chirality. In various embodiments, the carbon nanotubes are defect free. The carbon nanotubes may have any number of concentric walls, including but not limited to, single-wall carbon nanotubes, double-wall carbon nanotubes, and multi-wall carbon nanotubes. Carbon nanotubes may also be shortened carbon nanotubes or carbon nanotubes functionalized with organic functional groups. Shortened carbon nanotubes may be produced through oxidative cleavage of full length carbon nanotubes. A non-limiting method for shortening carbon nanotubes includes oxidizing carbon nanotubes in a mixture of nitric acid and fuming sulfuric acid (oleum). Although various embodiments are described hereinbelow using a certain type of carbon nanotube, such as single-wall carbon nanotubes, one skilled in the art will recognize, given the features and advantages of the disclosure described herein, that any of the various embodiments may be practiced equivalently within the spirit and scope of the disclosure with any type of carbon nanotube.

In various embodiments, methods are described for making articles comprising neat, aligned carbon nanotubes. The methods comprise the steps of: 1) preparing a solution of carbon nanotubes in a super acid solvent; 2) extruding the solution to provide an extrudate; and 3) removing the super acid solvent from the extrudate. The concentration of carbon nanotubes in the super acid solvent is chosen such that the solution is in a liquid crystalline state. The methods include applying tension during extrusion step. The articles may take a form selected from a group including, but not limited to, a fiber, tape, sheet, or film.

In various embodiments of the methods, the carbon nanotubes are selected from a group consisting of single-wall carbon nanotubes, double-wall carbon nanotubes, multi-wall carbon nanotubes, and shortened single-wall carbon nanotubes. In various embodiments of the methods, the carbon nanotubes have a length up to about 10 mm. In other various embodiments of the methods, the carbon nanotubes have a length up to about 5 mm. In other various embodiments of the methods, the carbon nanotubes have a length up to about 1 mm. In other various embodiments of the methods, the carbon nanotubes have a length up to about 500 µm. In various embodiments, the carbon nanotubes are substantially defect free. The relative incidence of defect sites in the carbon nanotubes may be monitored using the G/D ratio obtained from Raman spectroscopy.

Super acids suitable for practicing the disclosure include Brønsted superacids, Lewis superacids, and conjugate Brønsted-Lewis superacids. Brønsted superacids may include, but are not limited to, perchloric acid, chlorosulfonic acid, fluorosulfonic acid, trifluoromethane sulfonic acid, and higher perfluoroalkane sulfonic acids (C₂F₅SO₃H, C₄F₉SO₃H, C₅F₁₁SO₃H, C₆F₁₃SO₃H, and C₈F₁₇SO₃H, for example). Lewis superacids may include, but are not limited to, antimony pentafluoride and arsenic pentafluoride. Brønsted-Lewis superacids may include sulfuric acids containing various concentrations of SO₃, also known as oleums or fuming sulfuric acid. Other Brønsted-Lewis superacids may include, but are not limited to, polyphosphoric acid-oleum mixtures, tetra(hydrogen sulfate)boric acid-sulfuric acid, fluorosulfuric acid-antimony pentafluoride ("magic acid"), fluorosulfuric acid-SO₃, fluorosulfuric acid-arsenic pentafluoride, fluorosulfonic acid-hydrogen fluoride-antimony pentafluoride, fluorosulfonic acid-antimony pentafluoride-sulfur trioxide, fluoroantimonic acid, and tetrafluoroboric acid. In various embodiments of the methods presented herein, the super acid solvent comprises chlorosulfonic acid.

Chlorosulfonic acid is particularly advantageous for dissolving carbon nanotubes in the methods and processes described hereinbelow, since it can dissolve a wide variety of types and lengths of carbon nanotubes at very high concentrations. For example, carbon nanotube length is not a limiting factor with chlorosulfonic acid, as is the case with other super acids, such as oleum, which only dissolves single-wall carbon nanotubes up to about 1 µm in length. Further, chlorosulfonic acid readily dissolves double-wall and multi-wall carbon nanotubes, unlike other super acids, such as oleum, which only provide limited solubility for carbon nanotube species having more than one wall. Carbon nanotubes up to millimeters and more in length, each having any number of concentric nanotubes, may be readily dissolved by chlorosulfonic acid. Chlorosulfonic acid can easily dissolve long (millimeter and longer) carbon nanotubes grown as arrays, whereas other super acids, such as oleum, have no such dissolving power. Other pre-existing carbon nanotube articles, such as fibers and carbon alewives may also be dissolved.

A much higher concentration of carbon nanotubes may be obtained in chlorosulfonic acid relative to other super acids, such as oleum. For example, carbon nanotube solutions up to a concentration of about 17 wt. % have been prepared in chlorosulfonic acid and processed into neat carbon nanotube articles. This concentration value represents a current limit of laboratory-scale processing capability due to the viscosity of the carbon nanotube chlorosulfonic acid solutions. However, this concentration value should not be considered limiting, as one skilled in the art will recognize the utility of using the highest possible concentration of carbon nanotubes in the methods described herein. Further, one of skill in the art will recognize that much more viscous solutions can be processed using industrial-scale processing facilities. Carbon nanotube solutions of up to about 2400 ppm have been prepared in chlorosulfonic acid, although no upper solubility limit has yet been established. In various embodiments, carbon nanotubes that are substantially defect free are preferentially dissolved by chlorosulfonic acid. For example, non-dissolved residue isolated from carbon nanotube dissolutions in chlorosulfonic acid demonstrates a markedly lower Raman spectroscopy G/D ratio relative to the parent carbon nanotube material. The lower G/D ratio is characteristic of increased carbon nanotube sidewall defects in the undissolved material

Although viscosity of the carbon nanotube chlorosulfonic acid solution is somewhat problematic in terms of processibility, it does provide advantageous characteristics in other regards. For example, viscosity of the carbon nanotube extrudate is such that tensioning of the extrudate may be performed. As discussed in more detail hereinbelow, tensioning of the extrudate is beneficial for aligning the carbon nanotubes in the extruded articles. Tensioning may also provide densification of the aligned carbon nanotubes. In various embodiments, the extrudate is wound on to a take up roll to provide the tension. In other words, the tension is provided by drawing the extrudate. In other various embodiments, at least one coagulant provides the tension, where the coagulant is co-flowed with the extrudate. Coagulants and the advantages of co-flow are described in more detail hereinbelow.

The spin-draw ratio is defined as the ratio of the linear extrusion speed to the take-up roll speed for drawing. A high spin-draw ratio indicates elongation of the extrudate during extrusion. A high spin-draw ratio may promote alignment and coalescence of processed carbon nanotube fibers in certain embodiments.

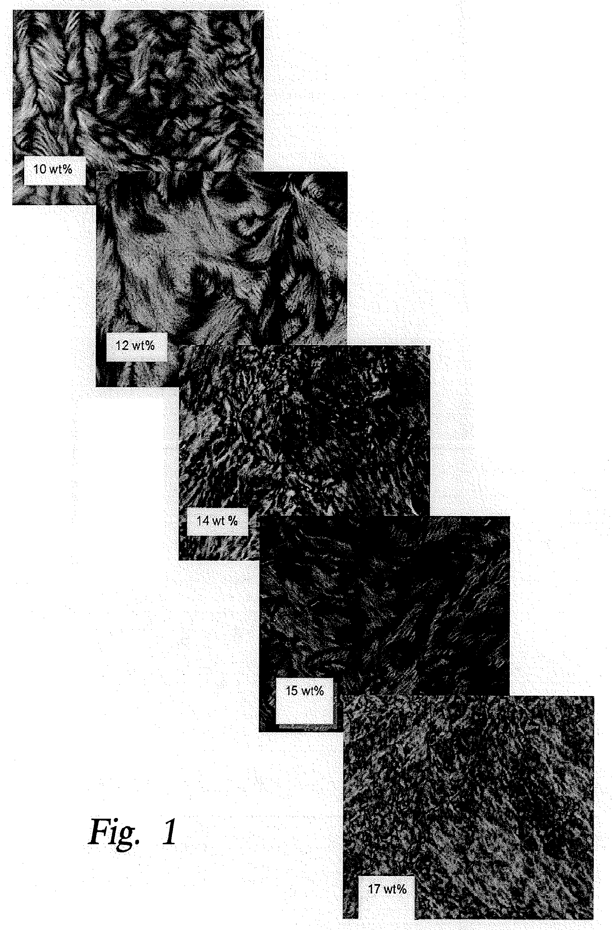

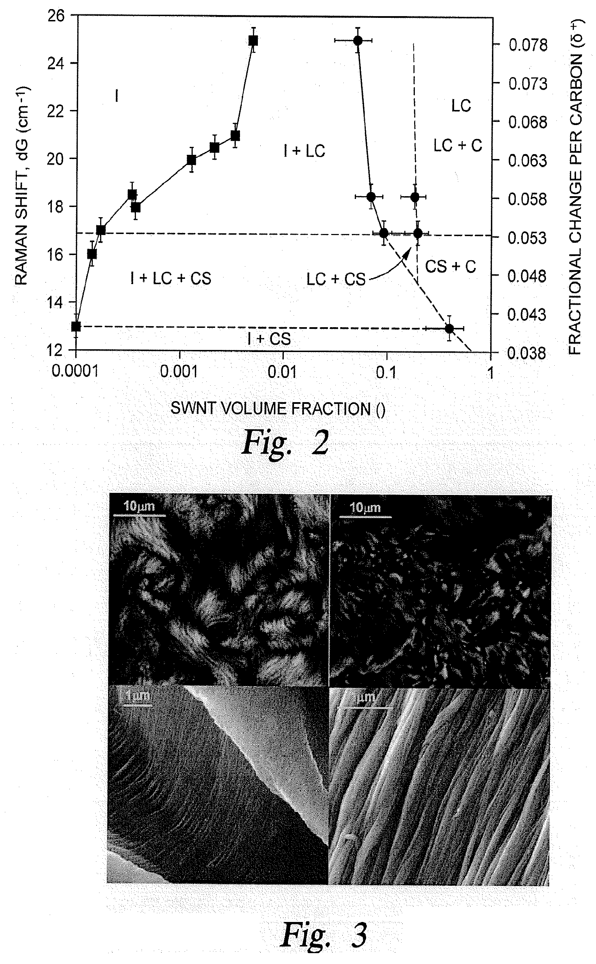

Without being bound by theory or mechanism, current understanding is that super acids intercalate between individual carbon nanotubes in as-formed ropes or bundles of nanotubes. In ropes or bundles, the individual carbon nanotubes are strongly held together by van der Waals forces. Super acids, which have extremely strong protonating ability, reversibly protonate the individual carbon nanotubes. The resulting electrostatic repulsion forces the nanotube bundles apart, providing the carbon nanotubes as individuals. Competition between electrostatic repulsion and van der Waals attraction causes the carbon nanotubes to behave as dispersed Brownian rods in super acid solutions. At a given concentration, rod-rod interactions begin to occur, eventually resulting in liquid crystalline behavior. As can be seen in FIGURE 1, single-wall carbon nanotubes form liquid crystalline solutions in chlorosulfonic acid over a non-limiting concentration range of 10% to 17%, as evidenced by polarized light microscopy. Isotropic solutions are obtained at low concentrations of carbon nanotubes in super acid media. As the concentration is increased, a biphasic solution comprising isotropic and liquid crystalline regions is produced. As the concentration is increased further still, the solution becomes liquid crystalline. An exemplary carbon nanotube phase diagram is shown in FIGURE 2. The specific phase boundaries are a function of such parameters as the carbon nanotube length, polydispersity, and the solvent quality. In various embodiments of the methods presented herein, the concentration of carbon nanotubes to produce the liquid crystalline state is up to about 17 wt. %. In other various embodiments of the methods presented herein, the concentration of carbon nanotubes to produce the liquid crystalline state is about 10 wt. % to about 17 wt. %. In certain embodiments, the liquid crystalline state is in equilibrium with an isotropic phase.

Liquid crystalline behavior is advantageous for producing dense, uniform extrudates having aligned, neat carbon nanotubes. As previously shown in FIGURE 1, the degree of liquid crystallinity in the carbon nanotube/super acid solution can be established by polarized light microscopy prior to extrusion. Establishing liquid crystallinity prior to extrusion is advantageous, since a high degree of liquid crystallinity prior to extrusion correlates well with better alignment of carbon nanotubes obtained following extrusion. Chlorosulfonic acid is particularly advantageous in this regard over weaker acids, since it provides large domains of liquid crystalline regions over a wide concentration range. For example, FIGURE 3 shows polarized light microscopy images of solutions of carbon nanotubes in both chlorosulfonic acid (**301**) and sulfuric acid (**302**). As is evident from the polarized light microscopy images, the chlorosulfonic acid solution forms larger liquid crystalline domains and is more amenable to extrusion of aligned carbon nanotubes than is the fuming sulfuric acid solution. The corresponding SEM images in FIGURE 3 of extruded fibers from chlorosulfonic acid (303) and sulfuric acid (**304**) reflect the higher degree of alignment in the chlorosulfonic acid solution. As is evident from FIGURE 3, chlorosulfonic acid produces a fiber having a smooth, well-coalesced surface in contrast to the rough surface and non-coalesced fibers produced by the smaller liquid crystalline domains of sulfuric acid. In various embodiments, the liquid crystalline domain sizes of carbon nanotube solutions in chlorosulfonic acid are affected by the length of the dissolved carbon nanotubes. In various embodiments, the liquid crystalline domain sizes of carbon nanotube solutions in chlorosulfonic acid are affected by the type dissolved carbon nanotubes. In various embodiments, the liquid crystalline domain sizes of carbon nanotube solutions in chlorosulfonic acid are affected by the method in which the solution is processed during mixing.

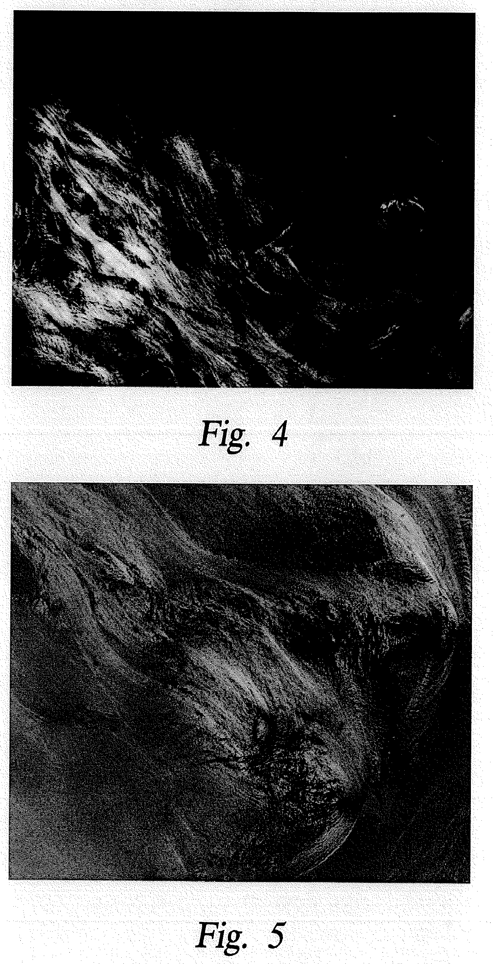

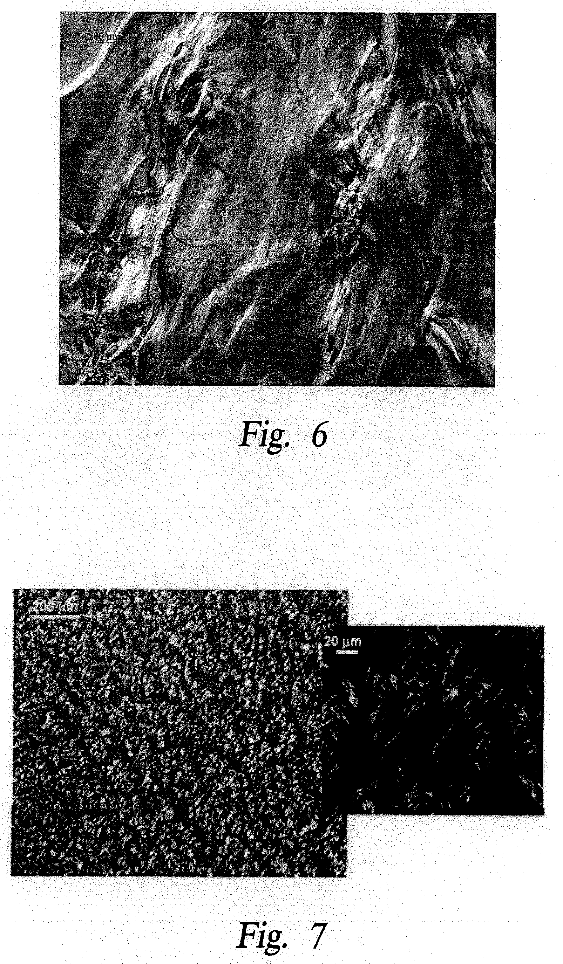

As discussed hereinabove, a particular advantage of chlorosulfonic acid is its ability to dissolve carbon nanotubes having a wide variety of lengths. Further, a wide variety of carbon nanotube lengths form liquid crystalline solutions in this solvent. FIGURE 4 shows that single-wall carbon nanotubes of about 30 µm in length produce a liquid crystalline solution in chlorosulfonic acid as shown by polarized light microscopy. Likewise, carbon nanotubes up to 500 µm in length give a liquid crystalline solution in chlorosulfonic acid as shown in FIGURE 5 by polarized light microscopy. FIGURE 6 shows that double-wall carbon nanotubes of about 30 µm in length also form a liquid crystalline solution in chlorosulfonic acid as shown by polarized light microscopy. For a sample having polydisperse carbon nanotube lengths, the longer elements will form liquid crystalline regions first, followed progressively by the shorter length carbon nanotubes.

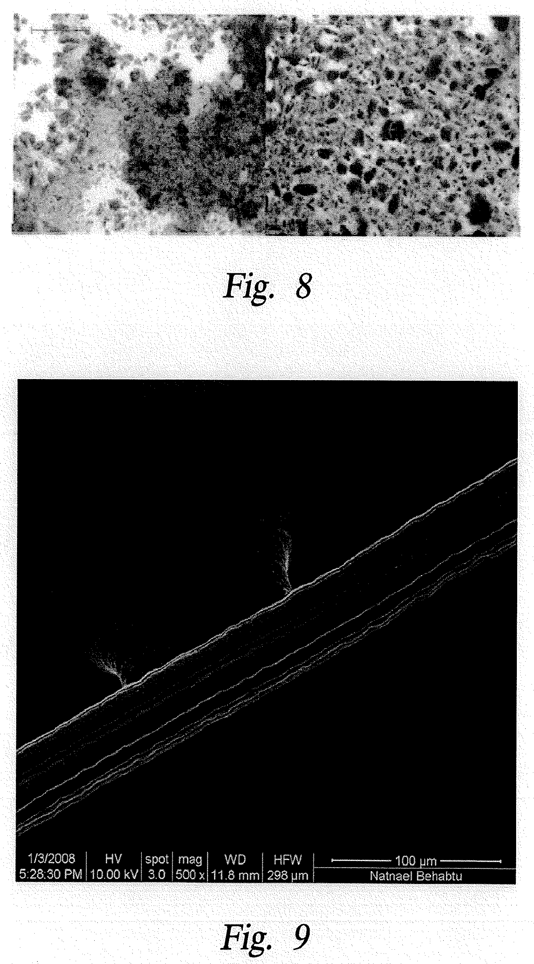

Chlorosulfonic acid is also advantageous for solubilizing and aligning shortened single-wall carbon nanotubes, such as those produced by oxidative cutting of full-length single-wall carbon nanotubes. Although shortened single-wall carbon nanotubes are considerably more soluble in organic solvents than are insoluble, unfunctionalized carbon nanotubes, the shortened single-wall carbon nanotubes do not form liquid crystalline domains in normal organic solvents. However, in chlorosulfonic acid, shortened single-wall carbon nanotubes form a liquid crystalline phase at about 10 wt. % concentration, as evidenced by the polarized light microscopy image shown in FIGURE 7. Comparative polarized light microscopy images of shortened single-wall carbon nanotube solutions in DMF (**801**) and 120% sulfuric acid (**802**) do not show birefringence characteristic of liquid crystalline regions as shown in FIGURE 8. Further, the concentration of shortened single-wall carbon nanotubes in chlorosulfonic acid is significantly higher than can be obtained in even the best organic solvents, such as DMF. The liquid crystalline chlorosulfonic acid solutions may be used to produce aligned shortened carbon nanotube extrudates. An SEM image of an exemplary carbon nanotube fiber grown from a 10 wt. % chlorosulfonic acid solution of shortened single-wall carbon nanotubes is shown in FIGURE 9. In certain applications, aligned shortened carbon nanotubes may prove beneficial.

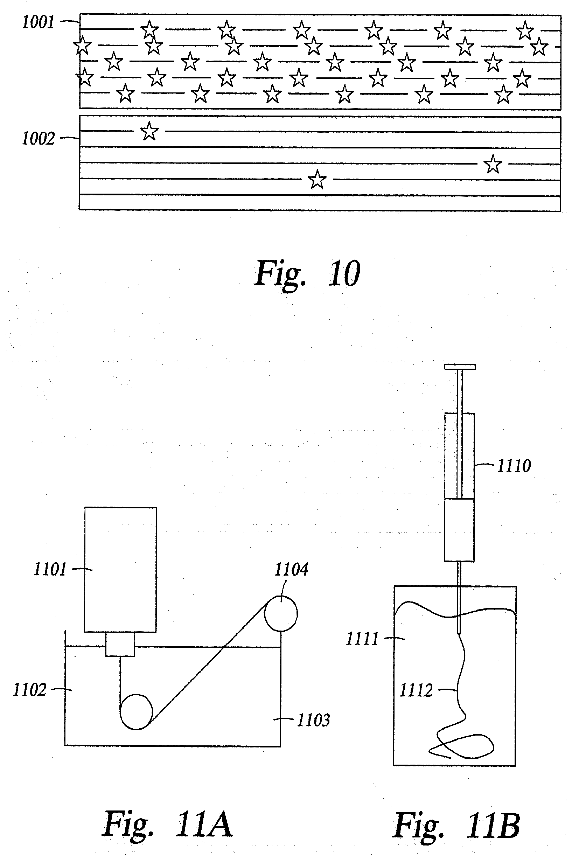

The ability of chlorosulfonic acid to dissolve very long carbon nanotubes is advantageous for processing carbon nanotubes into articles having directional properties most reminiscent of individual carbon nanotubes. Alignment of the carbon nanotubes provides beneficial utilization of their directional physical properties. In the processed carbon nanotube articles produced by the methods disclosed herein, the carbon nanotubes are densified into large bundles of aligned carbon nanotubes held together by van der Waals forces. One can envision these bundles similarly to those encountered with raw carbon nanotubes, except on a macroscopic scale. As illustrated in FIGURE 10, when the individual carbon nanotube lengths are shorter (**1001**), there are more disconnects between individual carbon nanotubes in the shaped article, wherein the breaks potentially become points of mechanical failure. In FIGURE 10, stars represent a non-bonded disconnect between individual carbon nanotube ends. In contrast, with longer carbon nanotubes (**1002**), there are fewer disconnects between individual carbon nanotubes, conveying mechanical properties to the macroscopic bundle more representative of that of a single nanotube. In other words, as the carbon nanotube length becomes very long, the article mechanical properties become independent of the carbon nanotube aspect ratio. At shorter lengths, the mechanical properties of a carbon nanotube article may be directly proportional to the carbon nanotube aspect ratio.

For carbon nanotube applications involving electrical conductivity, single-wall carbon nanotubes are most often used, although double-wall and multi-wall carbon nanotubes may also be utilized in certain applications. Depending on their chirality, single-wall carbon nantubes may have metallic, semi-metallic, or semi-conducting properties. Similarly to the mechanical applications discussed hereinabove, long carbon nanotubes provide beneficial properties in carbon nanotube articles having electrical conductivity. In metallic single-wall carbon nanotubes, conduction occurs ballistically over several micrometers without scattering along the essentially one-dimensional electronic structure of the individual nanotubes. In a shaped fiber comprising neat single-wall carbon nanotubes, current flows through the metallic single-wall carbon nanotubes through points of overlap. Thus, longer single-wall carbon nanotubes are advantageous in providing increased points of overlap between individual carbon nanotubes and fewer disconnects at carbon nanotube ends.

In various embodiments, the solution of carbon nanotubes in a super acid solvent is extruded through an orifice. The orifice is selected from a group consisting of a spinneret, needle, glass capillary, and film die. Other orifices known in the art of liquid phase extrusion may be considered by those of skill in the art. The length of the orifice is not particularly important for the methods described herein. Hence, the length of the extruding orifice may be varied over a wide range of values. In an embodiment, the extruding orifice is tapered. The carbon nanotube super acid solution undergoes shear as it flows through the extruding orifice, whether tapered or untapered. Shear promotes carbon nanotube alignment in the extrudate. For a given extrusion rate, the shear varies as the third power of the orifice diameter. Thus, as the orifice diameter is decreased, increased nanotube alignment occurs. In various embodiments, the orifice has a diameter between about 50 µm and about 500 µm. Plugging of the extrusion orifice can be problematic at lower orifice diameters, although this issue can be circumvented by passing the chlorosulfonic acid through a mesh screen filter prior to the extruding step.

In various embodiments of methods for making articles comprising neat carbon nanotubes, the removing step comprises treatment of the extrudate with at least one coagulant. Removing the super acid solvent from the carbon nanotube extrudate provides a solid article comprising neat carbon nanotubes. The solid article may be in a non-limiting form such as fibers, film, tapes, and sheets. Depending on how the coagulation step is performed, the microstructure and properties of a carbon nanotube article can be dramatically affected. For example, the rate of diffusion of the super acid solvent from the carbon nanotube article or the rate of coagulant diffusion into the carbon nanotube article can affect the article properties by influencing the phase change from a fluid to a solid that occurs during the coagulation process. Coagulant diffusion into the article can be especially problematic, since voids are created inside the article upon drying when inward diffusion occurs.

In the various embodiments of the methods described herein, the at least one coagulant is selected from a non-limiting group consisting of, hexane, ether, diethyl ether, poly(ethylene glycol), dimethyl sulfoxide, poly(vinyl alcohol), sulfuric acid, water, dichloromethane, chloroform, tetrachloroethane, Triton-X, polymerizable monomers, and combinations thereof. In various embodiments, the at least one coagulant is selected from a group consisting of water aqueous sulfuric acid, dichloromethane, chloroform, ether, and combinations thereof. Aqueous sulfuric acid concentrations may range from about 5% H₂SO₄ in water to about 95% H₂SO₄ in water. In certain embodiments, the at least one coagulant comprises a polymer soluble in organic solvents, such as chloroform or dichloromethane. Exemplary polymerizable monomers that may be useful for practicing the methods include, but are not limited to, vinyl pyrrolidone and vinyl alcohol.

In various embodiments of the methods disclosed herein, the removing step comprises evaporation of the super acid solvent. In certain embodiments of the methods, the evaporation is conducted with microwave heating. In other embodiments of the methods, the evaporation step in conducted under vacuum. Various considerations regarding evaporative removal are described in detail below.

To provide the best article morphology, slow removal of the super acid solvent is beneficial in certain embodiments. Slow removal of the super acid solvent can be accomplished by lowering the super acid concentration gradient between the coagulant and the extruded carbon nanotubes. If the super acid solvent is removed too rapidly, a skin effect can often be observed, where an article is covered with an aligned, dense layer of carbon nanotubes covering a porous, poorly aligned carbon nanotube core. Such skin effects produce an article having poor mechanical properties.

In various embodiments, the extruding step comprises a process selected from a group consisting of wet-jet wet spinning, dry-jet wet spinning and coagulant co-flow. Each of these extrusion processes is considered in more detail below.

Neat carbon nanotube fibers may be spun using a wet-jet wet spinning process similar to that previously described in commonly owned United States Patent Application No. 10/189,129. The wet-jet wet spinning processes and methods described herein, however, provide enhanced alignment capabilities by utilizing a liquid crystalline solution which can be tensioned after extrusion. In the wet-jet wet spinning process, the extrudate is directly immersed in a coagulant from an extrusion orifice. In various embodiments, the extruding step occurs into at least one coagulant without exposure to atmosphere. Exemplary schematics of the wet-jet wet spinning process are shown in FIGURES 11a and 11b. In FIGURE 11a, extruder **1101** is dispensed into coagulant bath **1103** to provide fiber **1102**. Tension is provided by drawing the fiber **1102** on to take up reel **1104** in a continuous process. A slightly different process is illustrated in FIGURE 11b. Syringe **1110** containing a chlorosulfonic acid solution of carbon nanotubes is dispensed into coagulant bath **1111** to provide fiber **1112**. A tensioning step is not shown in FIGURE 11b. Single-wall carbon nanotube fibers produced by the wet-jet wet spinning processes disclosed herein have demonstrated a resistivity of 1.2 µΩ-m, a modulus of 16.7 GPa, and a tensile strength of 40 MPa. Effective coagulants include, but are not limited to, chloroform, dichloromethane, tetrachloroethane and ether.

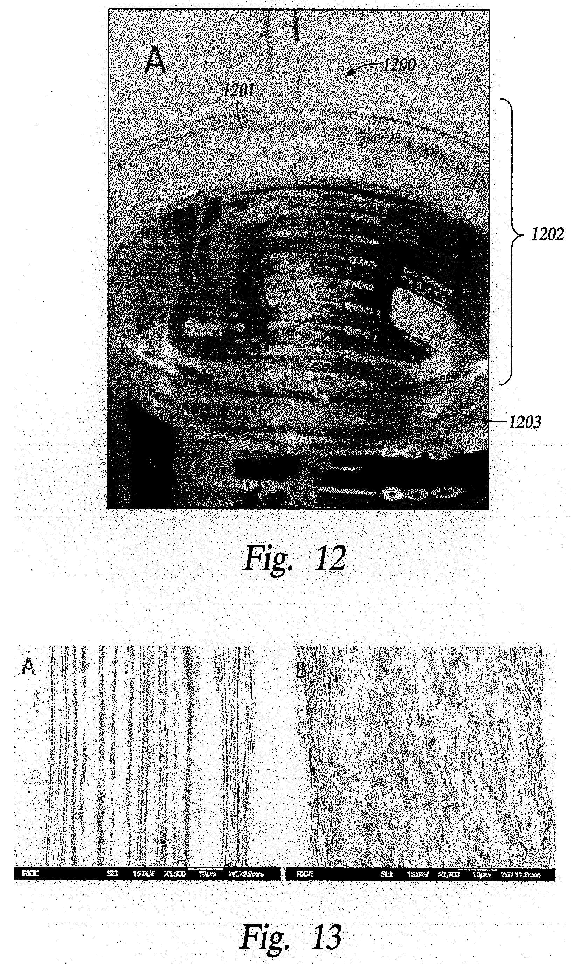

Other methods of processing the carbon nanotube solution in chlorosulfonic acid may be utilized as well. In various embodiments, the extruding step takes place in an air gap. Instead of direct extrusion into a coagulant as in wet-jet wet spinning, the extrudate may pass through an air gap prior to entering the coagulant. Such a process is referred to as dry-jet wet spinning, and an exemplary experimental embodiment of the process is illustrated in FIGURE 12. FIGURE 12 shows fiber **1201** eluting from extrusion needle **1200** and passing through air gap **1202** prior to entering coagulant bath **1203**. Processing neat carbon nanotube articles using a dry-jet wet spinning process can prove advantageous over wet-jet wet spinning. For example, dry-jet wet spun fibers demonstrate an increased density and greater coalescence when exposed to the air gap, compared to comparable fibers prepared by wet-jet wet spinning. Fibers spun in an air gap tend to experience a greater tensioning force relative fibers spun in solution, which is advantageous for carbon alignment. Exemplary fibers spun by both processes are shown in FIGURE 13. As can be seen in FIGURE 13, dry-jet wet spinning (**1301**) produces a denser and more coalesced fiber than does wet-jet wet spinning (**1302**). In various embodiments, the air gap is about 4" for chlorosulfonic acid/carbon nanotube extrudates. The air gap allows cooling and elongation of the extrudate prior to elongation. The 4" air gap represents a non-optimized length, and various lengths of air gaps may be determined by routine experimentation within the spirit and scope of the disclosure. In certain embodiments, the mechanical properties of dry-jet wet spun articles may be enhanced 10-fold over wet-jet wet spinning.

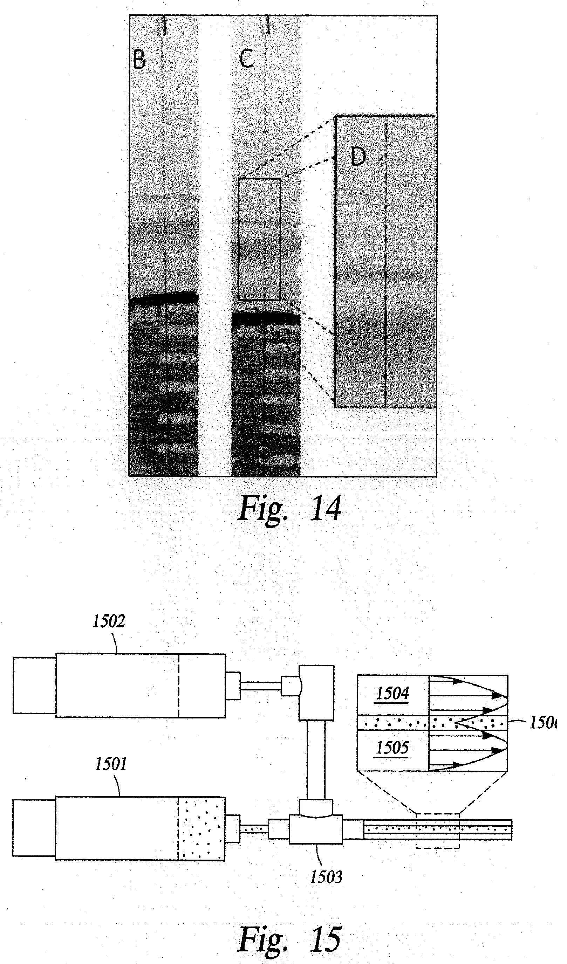

In extruding the carbon nanotube super acid solutions, an air gap can be problematic due to the hygroscopic and reactive nature of the super acid. As shown in FIGURE 14, when extrusion is halted and a carbon nanotube fiber is allowed to hang in the air gap, water droplets coalesce on the outer surface of the fiber prior to its entry into the coagulant liquid. The water droplets can cause early coalescence of the extrudate and prevent further elongation. Reaction with water can be prevented by filling the air gap with a dry, inert gas. In various embodiments, the extruding step takes place in a tube filled with a flowing inert gas. The flowing inert gas creates a dry environment for the extrudate prior to its entry into the coagulant bath. The tube can be constructed from various materials, such as but not limited to glass, plastic and stainless steel. The flowing inert gas can apply a tension force to the extrudate in various embodiments.

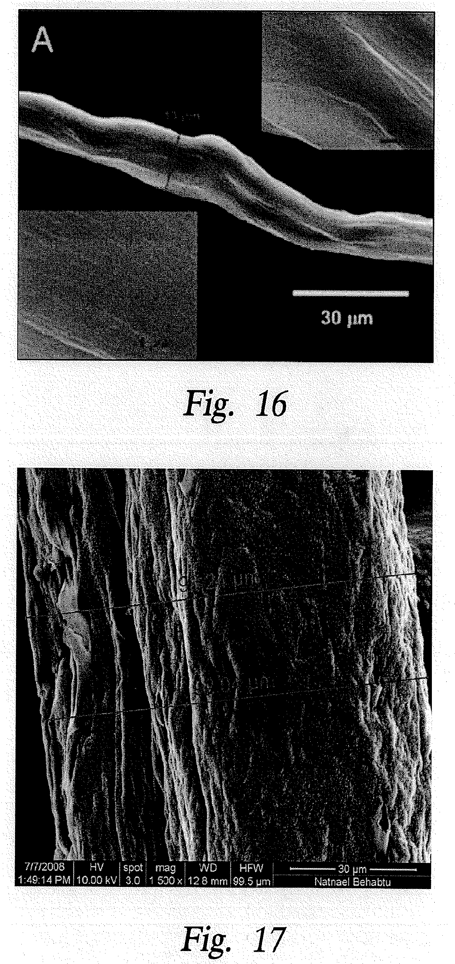

Instead of direct extrusion into a coagulant bath or extrusion through an air gap into a coagulant bath, other methods of coagulating the carbon nanotube extrudate may be utilized. For example, coagulant may be co-flowed with the extruded carbon nanotubes. A non-limiting embodiment of an extrusion apparatus providing for coagulant co-flow is shown in FIGURE 15. As shown in FIGURE 15, a carbon nanotube solution in reservoir **1501** is extruded while coagulant from reservoir **1502** is flowed at the same time. Mixing of the carbon nanotubes and coagulant takes place at interface **1503**, where the coagulant **1504** first meets the carbon nanotube extrudate **1505**. As shown in FIGURE 15, coagulant **1504** is flowed in the same direction. When coagulant **1504** is flowed in the same direction as carbon nanotube extrudate **1505**, the coagulant **1504** provides stretching and tensioning forces that promotes carbon nanotube alignment. Further, the gradient created by the co-flowing coagulant **1504** facilitates slow removal of super acid solvent, thus promoting better extrudate morphology. In certain embodiments, coagulant **1504** is co-flowed at a higher average velocity than extrudate **1505** to provide a higher tensioning force. Co-flow allows coagulants that do not provide good extrudate morphology by direct wet-jet wet spinning or dry-jet wet spinning to function as acceptable coagulants. For example, direct extrusion of a 7 wt. % solution of single-wall carbon nanotubes in chlorosulfonic acid into 96% sulfuric acid produces an extrudate having poor morphology. However, if 96% sulfuric acid is co-flowed with the same carbon nanotube solution, an extrudate having no corrugation and a very smooth surface results as shown in FIGURE 16. Since 96% sulfuric acid borders on being a solvent for carbon nanotubes (≥ 100% sulfuric acid provides carbon nanotube solubility), the coagulation process is slow, which explains the good fiber morphology. Co-flow can also be conducted with a 17 wt. % solution of single-wall carbon nanotubes in chlorosulfonic acid with PEG-200 coagulant to form an extrudate having good morphology as shown in FIGURE 17

Another means of removing the super acid solvent from the carbon nanotube extrudate does not involve a coagulant at all. Instead, simple evaporative removal of the super acid solvent is performed. This process is referred to as dry spinning. In various embodiments, the super acid solvent may be removed by evaporation at room temperature or with heating. In various embodiments, evaporation may be conducted at atmospheric pressure or under vacuum. Exemplary carbon nanotube fibers formed via slow evaporation were found to have a resistivity of about 2.1 µΩ-m, a modulus of 16.7 GPa, and a tensile strength of 40 MPa.

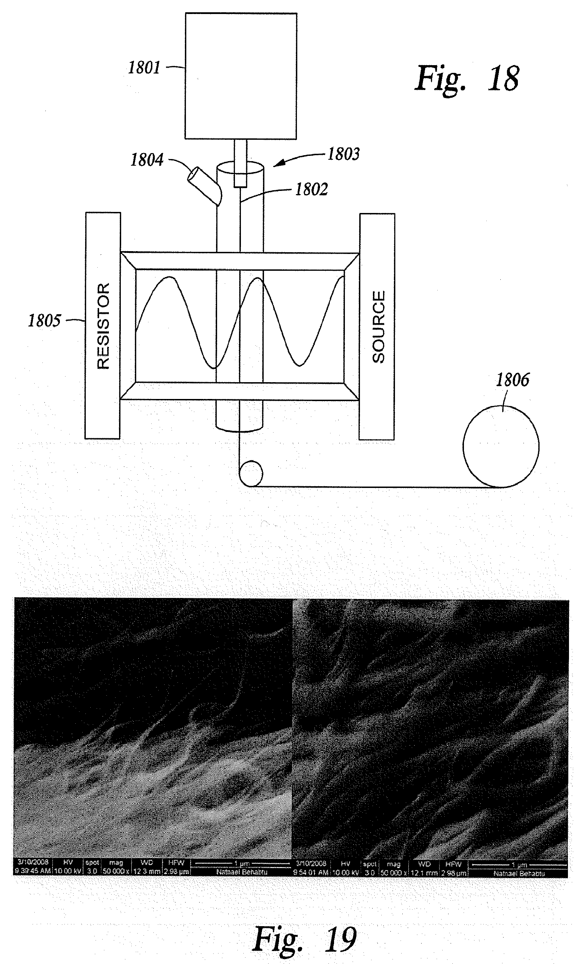

As chlorosulfonic acid has a low vapor pressure and high boiling point, heating the extrudate to remove solvent may be advantageous. In certain embodiments, the heating takes place through microwave heating. Carbon nanotubes are known to absorb microwave energy, which can be used to rapidly heat the carbon nanotube extrudate and facilitate chlorosulfonic acid removal. In conventional dry spinning processes, the solvent is evaporated by heated air co-flowed with the extrudate. Microwave heating is particularly advantageous for dry heating of carbon nanotube articles, since the carbon nanotubes themselves are heated by the microwave energy. This factor is advantageous in providing homogenous heating of the carbon nanotube article. In contrast heated air heats the article from the outside in An exemplary dry spinning apparatus providing microwave heating to a carbon nanotube extrudate under a semi-inert atmosphere is illustrated in FIGURE 18. This apparatus allows microwave energy to be applied as a carbon nanotube extrudate **1802** is passed from reservoir **1801** and continuously wound on to collection drum **1806**. Extrusion is performed into a tube **1803** filled with flowing inert and moisture free gas to provide a semi-inert atmosphere to the extrudate. The extrudate passes through the tube **1803** where microwave energy source **1805** provides the heating. The semi-inert atmosphere tempers the effects of the hygroscopic and reactive properties of chlorosulfonic acid noted hereinabove. Inert gas is supplied to the tube via inert gas inlet **1804**. Not only does the inert gas protect the extrudate from atmospheric moisture, but it also provides tension to the extrudate. As will be evident to one of skill in the art, the inert gas tube should be formed from a material which does not interact with microwave radiation, such as glass or plastic. The length of the microwave cavity and the draw rate can be altered to provide drying times suitable for fully removing the solvent and producing an extrudate having a desired morphology. In various embodiments, the inert gas tube can also be applied directly in the dry-jet wet spinning process to provide moisture-free air gap conditions. When applied to the dry-jet wet spinning process, the choice of material for forming the inert gas tube is not limited to a material that does not interact with microwave radiation.

The extrudate can be processed further after removal of the super acid solvent to improve properties of completed carbon nanotube articles. In various embodiments, the methods disclosed herein further comprise processing the article following the removing step. In various embodiments, the processing step comprises a treatment selected from a group consisting of heating, heating under vacuum, heating in air, and heating in H₂. Annealing by heating under vacuum or in air may allow densification and smoothing of formed articles. In certain embodiments, annealing may create bonds between individual carbon nanotubes, which may provide strengthening of formed articles for various applications. Heating in H₂ reduces any oxidized carbon nanotubes back into their unfunctionalized state. The post processing steps can also entail twisting of extruded carbon nanotube fibers to form a yarn.

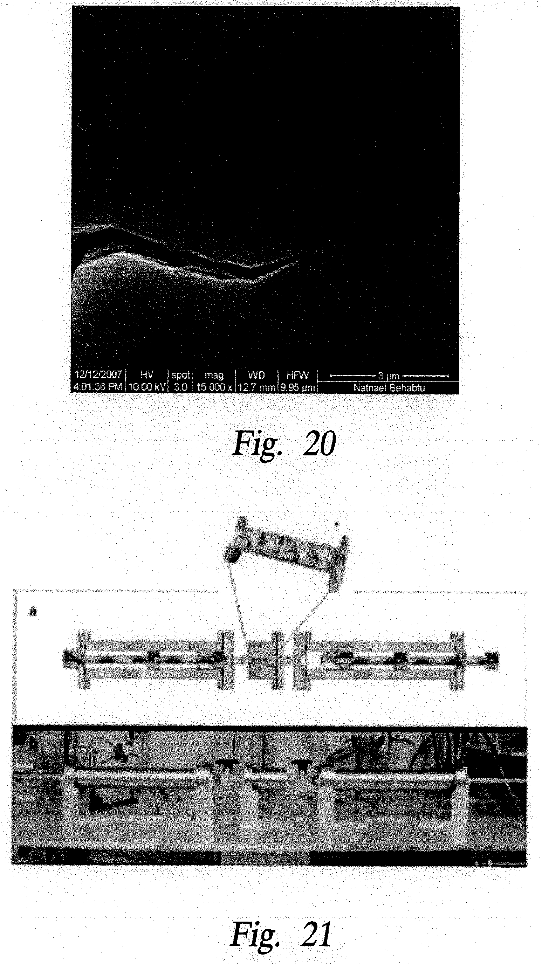

Free standing films of carbon nanotubes may be prepared on surfaces, such as glass and teflon using the super acid carbon nanotube solutions. The solution is deposited on a surface and then rolled to produce a film. The film is then coagulated using either vacuum removal of the super acid solvent or through use of a liquid coagulant. A film of about 1 µm in thickness produced from a 12 wt. % solution of single-wall carbon nanotubes using ethyl ether as the coagulant is shown in FIGURE 19. The morphology of the film is slightly different on the glass surface (**1901**) compared to the air surface (**1902**). As shown in FIGURE 20, a 10 wt. % solution of shortened single-wall carbon nanotubes in chlorosulfonic acid may also be used to provide a film on glass having a smoother morphology than is obtained with full length carbon nanotubes.

Articles comprising neat aligned carbon nanotubes are described herein. The articles are prepared by the various processes described hereinbelow.

The articles comprising neat aligned carbon nanotubes are prepared by a process comprising the steps of: 1) preparing a solution of carbon nanotubes in a super acid solvent; 2) extruding the solution to provide an extrudate; and 3) coagulating the extrudate to remove the super acid solvent. The concentration of carbon nanotubes in the super acid solvent is chosen such that the solution is in a liquid crystalline state. The extruding step is conducted such that the solution is extruded into at least one coagulant without exposure to atmosphere. Such processes comprise wet-jet wet spinning methods for carbon nanotube articles.

The articles comprising neat aligned carbon nanotubes are prepared by a process comprising the steps of: 1) preparing a solution of carbon nanotubes in a super acid solvent; 2) extruding the solution to provide an extrudate; and 3) coagulating the extrudate to remove the super acid solvent. The concentration of carbon nanotubes in the super acid solvent is chosen such that the solution is in a liquid crystalline state. The extruding step is conducted such that the solution is extruded into at least one coagulant after passing through an air gap. Such processes comprise dry-jet wet spinning methods for carbon nanotube articles.

The articles comprising neat aligned carbon nanotubes are prepared by a process comprising the steps of: 1) preparing a solution of carbon nanotubes in a super acid solvent; 2) extruding the solution to provide an extrudate; and 3) coagulating the extrudate to remove the super acid solvent. The concentration of carbon nanotubes in the super acid solvent is chosen such that the solution is in a liquid crystalline state. The extruding step is conducted such that at least one coagulant is co-flowed with the extrudate. Such processes comprise coagulant co-flow methods for spinning carbon nanotube articles.

The articles comprising neat aligned carbon nanotubes are prepared by a process comprising the steps of: 1) preparing a solution of carbon nanotubes in a super acid solvent; 2) extruding the solution to provide an extrudate; and 3) evaporating the super acid solvent. The concentration of carbon nanotubes in the super acid solvent is chosen such that the solution is in a liquid crystalline state.

The articles, the processes further comprise applying tension during extrusion step. In various embodiments of the articles, the articles are selected from a group consisting of a fiber, tape, sheet and film. In various embodiments of the articles, the carbon nanotubes are selected from a group consisting of single-wall carbon nanotubes, double-wall carbon nanotubes, multi-wall carbon nanotubes, and shortened single-wall carbon nanotubes. In some embodiments of the articles, the carbon nanotubes have a length up to about 10 mm. In various embodiments of the articles, the carbon nanotubes are substantially defect free. In various embodiments of the articles, the super acid solvent comprises chlorosulfonic acid.

In any of the various article embodiments utilizing at least one coagulant in the process for forming the article, the at least one coagulant may be selected from a group consisting of hexane, ether, diethyl ether, poly(ethylene glycol), dimethyl sulfoxide, poly(vinyl alcohol), water, sulfuric acid, dichloromethane, chloroform, tetrachloroethane, Triton-X, polymerizable monomers, and combinations thereof.

In any of the various embodiments utilizing an evaporating step in the process for forming the article, the evaporating step may be conducted with microwave heating. In any of the various embodiments utilizing an evaporating step in the process for forming the article, the evaporating step may be conducted under vacuum. In any of the various embodiments of the processes for forming the carbon nanotube articles, the extrudate may be passed through a tube filled with a flowing inert gas. In certain embodiments of the processes, the tube filled with a flowing inert gas is used in a process involving microwave heating of the extrudate.

In various embodiments, methods are presented to densify existing carbon nanotube articles. The methods comprise treating an article with chlorosulfonic acid and removing the chlorosulfonic acid. The existing carbon nanotube articles are selected from a group consisting of fibers, arrays and carbon alewives.

### Experimental Examples

The following experimental examples are included to demonstrate particular aspects of the present disclosure. It should be appreciated by those of skill in the art that the methods described in the examples that follow merely represent exemplary embodiments of the disclosure. Those of skill in the art should, in light of the present disclosure, appreciate that many changes can be made in the specific embodiments described and still obtain a like or similar result without departing from the spirit and scope of the present disclosure.

### Example 1: Preparation of Carbon Nanotube Solutions in Chlorosulfonic Acid

Carbon nanotubes were mixed with chlorosulfonic acid in a dry box and allowed to stand overnight to produce a viscous carbon nanotube solution for processing. The carbon nanotube solutions were then processed in various ways depending on the concentration. For concentrations up to about 0.5 wt. %, mixing was accomplished with Teflon coated magnetic stir bars. For intermediate concentrations up to about 7 wt. %, solution viscosity dictated more elaborate processing for complete mixing. For the intermediate concentration range, a small glass reactor utilizing a mechanically stirred Teflon paddle was used. For still higher concentrations up to about 17 wt. %, the carbon nanotube solution was sealed in a mixer/extruder, which used the alternative motion of two pistons **2101** to push the carbon nanotube solution through a tortuous path **2102** to provide complete mixing. A photograph and schematic of an embodiment of the mixer/extruder is shown in FIGURE 21. The screw-like tortuous path provided high shear mixing to give well dispersed carbon nanotube solutions at high concentrations in chlorosulfonic acid. The mixer/extruder was constructed from SS316, since this material is resistant to chlorosulfonic acid. The working pressure was up to about 2000 psi. The mixer/extruder has been constructed such that it may be conveniently loaded in a controlled inert environment, such as a glove box.

### Example 2: Extrusion of Carbon Nanotube Solutions

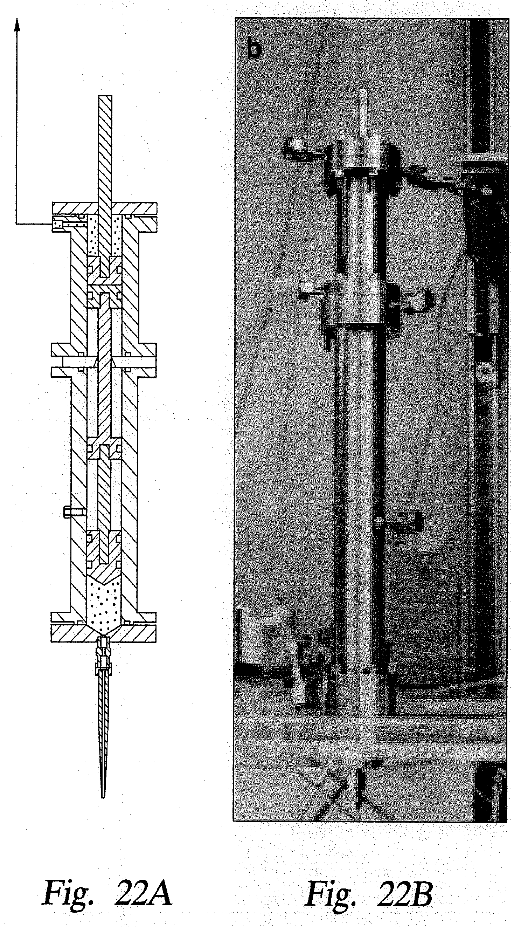

After mixing, the viscous solution was directly extruded from the mixer/extruder. Operation of the mixer/extruder in its extrusion mode is shown photographically and schematically in FIGURE 22. The design of the extruder is such that it can be used for any of the various extrusion processes described in detail hereinabove.

From the foregoing description, one skilled in the art can easily ascertain the essential characteristics of disclosure. . The embodiments described hereinabove are meant to be illustrative only and should not be taken as limiting of the scope of the disclosure, which is defined in the following claims

## Claims

1. A method for making an article comprising neat aligned carbon nanotubes, said method comprising:
1) preparing a solution of carbon nanotubes in a super acid solvent;
wherein a concentration of carbon nanotubes in the super acid solvent is chosen such that the solution is in a liquid crystalline state;
2) extruding the solution to provide an extrudate, wherein tension is applied during the extruding step; and
3) removing the super acid solvent from the extrudate.

2. The method of claim 1, wherein the super acid solvent comprises chlorosulfonic acid.

3. The method of claim 1 or claim 2, wherein the liquid crystalline state is in equilibrium with an isotropic phase.

4. The method of claim 1 or claim 2, wherein a concentration of carbon nanotubes to produce the liquid crystalline state is about 10 wt. % to about 17 wt. %.

5. The method of any one of claims 1-4, wherein the carbon nanotubes are selected from the group consisting of single-wall carbon nanotubes, double-wall carbon nanotubes, multi-wall carbon nanotubes, and shortened single-wall carbon nanotubes.

6. The method of any one of claims 1-5, wherein at least one coagulant is co-flowed with the extrudate to provide the tension.

7. The method of any one of claims 1-5, wherein the extrudate is wound on to a take up roll to provide the tension.

8. The method of claim 7, wherein extruding takes place into at least one coagulant without exposure to atmosphere.

9. The method of any one of claims 6 or 8, wherein the at least one coagulant is selected from the group consisting of hexane, ether, diethyl ether, poly(ethylene glycol), dimethyl sulfoxide, poly(vinyl alcohol), water, sulfuric acid, dichloromethane, chloroform, tetrachloroethane, polymerizable monomers, polymers soluble in organic solvents, and combinations thereof.

10. The method of any one of claims 1 - 5 or 7, wherein extruding the solution takes place in an air gap.

11. The method of claim 10, wherein the air gap is filled with a dry, inert gas.

12. The method of claim 11, wherein extruding takes place in a tube filled with a flowing inert gas.

13. The method of any one of claims 1 - 5, 7 or 10 - 12, wherein removing the super acid solvent comprises evaporation of the super acid solvent.

14. The method of claim 13, wherein the evaporation is conducted with microwave heating.

15. The method of claim 13, wherein the evaporation is conducted under vacuum.

16. The method of any preceding claim, further comprising:
processing the article following removing the super acid solvent;
wherein processing the article comprises a treatment selected from the group consisting of heating, heating under vacuum, heating in air and heating in H₂.

## Patentansprüche

1. Verfahren zum Herstellen eines Artikels, der reine, ausgerichtete Kohlenstoff-Nanoröhrchen umfasst, wobei das Verfahren Folgendes umfasst:
1) Herstellen einer Lösung aus Kohlenstoff-Nanoröhrchen in einem supersauren Lösungsmittel;
wobei die Konzentration der Kohlenstoff-Nanoröhrchen in dem supersauren Lösungsmittel so gewählt ist, dass sich die Lösung in einem flüssig-kristallinen Zustand befindet;
2) Extrudieren der Lösung, um ein Extrudat zu erhalten, wobei während des Schritts des Extrudierens eine Spannung hergestellt wird, und
3) Entfernen des supersauren Lösungsmittels aus dem Extrudat.

2. Verfahren nach Anspruch 1, wobei das supersaure Lösungsmittel Chloroschwefelsäure umfasst.

3. Verfahren nach Anspruch 1 oder Anspruch 2, wobei sich der flüssig-kristalline Zustand im Gleichgewicht mit einer isotropen Phase befindet.

4. Verfahren nach Anspruch 1 oder Anspruch 2, wobei die Konzentration der Kohlenstoff-Nanoröhrchen zum Herstellen des flüssig-kristallinen Zustands circa 10 Gewichtsprozent bis circa 17 Gewichtsprozent beträgt.

5. Verfahren nach einem der Ansprüche 1 - 4, wobei die Kohlenstoff-Nanoröhrchen aus der Gruppe ausgewählt sind, die aus einwandigen Kohlenstoff-Nanoröhrchen, doppelwandigen Kohlenstoff-Nanoröhrchen, mehrwandigen Kohlenstoff-Nanoröhrchen und gekürzten einwandigen Kohlenstoff-Nanoröhrchen besteht.

6. Verfahren nach einem der Ansprüche 1 - 5 , wobei mindestens ein Koagulationsmittel mit dem Extrudat zusammengeführt wird, um die Spannung herzustellen.

7. Verfahren nach einem der Ansprüche 1 - 5 , wobei das Extrudat auf eine Aufnahmerolle gewickelt wird, um die Spannung herzustellen.

8. Verfahren nach Anspruch 7, wobei das Extrudieren in mindestens ein Koagulationsmittel ohne Kontakt zur Atmosphäre stattfindet.

9. Verfahren nach einem der Ansprüche 6 oder 8, wobei das mindestens eine Koagulationsmittel aus der Gruppe ausgewählt ist, die aus Hexan, Ether, Diethylether, Poly(ethylenglykol), Dimethylsulfoxid, Poly(vinylalkohol), Wasser, Schwefelsäure, Dichlormethan, Chloroform, Tetrachlorethan, polymerisierbaren Monomeren, in organischen Lösungsmitteln löslichen Polymeren und Kombinationen davon besteht.

10. Verfahren nach einem der Ansprüche 1 - 5 oder 7, wobei das Extrudieren der Lösung in einem Luftspalt erfolgt.

11. Verfahren nach Anspruch 10, wobei der Luftspalt mit einem trockenen, inerten Gas gefüllt ist.

12. Verfahren nach Anspruch 10, wobei das Extrudieren in einer mit einem strömenden inerten Gas gefüllten Röhre erfolgt.

13. Verfahren nach einem der Ansprüche 1 - 5, 7 oder 10 - 12, wobei das Entfernen des supersauren Lösungsmittels das Verdampfen des supersauren Lösungsmittels umfasst.

14. Verfahren nach Anspruch 13, wobei das Verdampfen durch Mikrowellenerwärmung erfolgt.

15. Verfahren nach Anspruch 13, wobei das Verdampfen unter Vakuum erfolgt.

16. Verfahren nach einem der vorhergehenden Ansprüche, ferner umfassend:
Verarbeiten des Artikels nach Entfernen des supersauren Lösungsmittels;
wobei das Verarbeiten des Artikels eine Behandlung umfasst, die aus der Gruppe, bestehend aus Erwärmen, Erwärmen unter Vakuum, Erwärmen an der Luft und Erwärmen in H₂, ausgewählt ist.

## Revendications

1. Procédé de fabrication d'un article comprenant des nanotubes de carbone alignés secs, ledit procédé comprenant :
1) la préparation d'une solution de nanotubes de carbone dans un solvant super-acide ;
la concentration de nanotubes de carbone dans le solvant super-acide étant choisie de sorte que la solution soit dans un état cristallin liquide ;
2) l'extrusion de la solution pour donner un extrudat, une tension étant appliquée pendant l'étape d'extrusion ; et
3) la suppression du solvant super-acide de l'extrudat.

2. Procédé selon la revendication 1, ledit solvant super-acide comprenant l'acide chlorosulfonique.

3. Procédé selon la revendication 1 ou la revendication 2, ledit état cristallin liquide étant en équilibre avec une phase isotrope.

4. Procédé selon la revendication 1 ou la revendication 2, la concentration de nanotubes de carbone pour produire l'état cristallin liquide valant environ 10 % en poids à environ 17 % en poids.

5. Procédé selon l'une quelconque des revendications 1 à 4, lesdits nanotubes de carbone étant choisis dans le groupe constitué par les nanotubes de carbone à simple paroi, les nanotubes de carbone à double paroi, les nanotubes de carbone à parois multiples et les nanotubes de carbone à simple paroi raccourcis.

6. Procédé selon l'une quelconque des revendications 1 à 5, au moins un coagulant étant co-coulé avec l'extrudat pour générer la tension.

7. Procédé selon l'une quelconque des revendications 1 à 5, ledit extrudat étant enroulé sur un rouleau récepteur pour générer la tension.

8. Procédé selon la revendication 7, l'extrusion ayant lieu dans au moins un coagulant sans exposition à l'atmosphère.

9. Procédé selon l'une quelconque des revendications 6 ou 8, ledit au moins un coagulant étant choisi dans le groupe constitué par l'hexane, l'éther, l'éther diéthylique, le polyéthylèneglycol, le sulfoxyde de diméthyle, un alcool polyvinylique, l'eau, l'acide sulfurique, le dichlorométhane, le chloroforme, le tétrachloroéthane, les monomères polymérisables, les polymères solubles dans les solvants organiques, et les combinaisons de ceux-ci.

10. Procédé selon l'une quelconque des revendications 1 à 5 ou 7, ladite extrusion de la solution ayant lieu dans une cavité d'air.

11. Procédé selon la revendication 10, ladite cavité d'air étant remplie d'un gaz inerte sec.

12. Procédé selon la revendication 11, ladite extrusion ayant lieu dans un tube rempli d'un gaz inerte en écoulement.

13. Procédé selon l'une quelconque des revendications 1 à 5, 7 ou 10 à 12, ladite suppression du solvant super-acide comprenant l'évaporation du solvant super-acide.

14. Procédé selon la revendication 13, ladite évaporation étant effectuée par chauffage par micro-ondes.

15. Procédé selon la revendication 13, ladite évaporation étant effectuée sous vide.

16. Procédé selon l'une quelconque des revendications précédentes, comprenant en outre :
le traitement de l'article suite à la suppression du solvant super-acide ;
ledit traitement de l'article comprenant un traitement choisi dans le groupe constitué par le chauffage, le chauffage sous vide, le chauffage dans l'air et le chauffage dans H₂.
